# EUROPEAN PATENT APPLICATION

(11) **EP 4 684 643 A1**
(43) Date of publication of application: **28.01.2026**
(21) Application number: 24859196.8
(22) Date of filing: 16.07.2024
(51) Int. Cl.: A22C 15/00, A22C 17/02, A22C 21/00

(54) **WORKPIECE GRIPPING APPARATUS AND WORKPIECE GRIPPING METHOD**

(30) Priority: 01.09.2023 JP 2023141939
(71) Applicant: MAYEKAWA MFG. CO., LTD., Tokyo 135-8482 (JP)
(72) Inventor: MATSUMOTO, Kousuke, Tokyo 135-8482 (JP); SAKURAYAMA, Hiroyuki, Tokyo 135-8482 (JP); KOYAMA, Yusuke, Tokyo 135-8482 (JP)
(74) Representative: Regimbeau
(86) International application number: PCT/JP2024/025433
(87) International publication number: WO 2025/047152

(57) **Abstract**

A work grasping apparatus includes: a gripper, a rotation unit, a driving device, and a controller. The gripper grasps a work conveyed by a conveyance unit. The rotation unit rotates the gripper so as to adjust an angle of the gripper with respect to a horizontal plane. The driving device includes a traversing unit and a lifting unit for moving the gripper and the rotation unit in an up-down direction and a front-back direction. The controller controls the driving device and the rotation unit so that the work is grasped by the gripper at a grasping position on the conveyance unit.

## Description

### TECHNICAL FIELD

The present disclosure relates to a work grasping apparatus and a work grasping method.

### BACKGROUND ART

A known meat processing apparatus automatically conveys and processes a piece of meat as a work. For instance, Patent Document 1 discloses a meat processing apparatus including a plurality of conveyors for conveying a work. In this document, a work conveyed by a conveyor is fed to a cutting station.

### Citation List

### Patent Literature

Patent Document 1: WO2009/139031A

### SUMMARY

### Problems to be Solved

In a processing station of a meat processing apparatus as in Patent Document 1, a work conveyed by a conveyor is processed in a state of being laid on the conveyor. At the processing station, various types and shapes of complex processes can be performed with the same hardware by changing the software. The complex processes performed at such a processing station use a robot arm whose force is relatively small, and thus it is difficult to perform processes that require a great force, such as pulling and separating meat from a work. Thus, to pull and separate meat from a work in a typical processing station, it is necessary to separate meat while cutting meat gradually with a blade, which may lead to an increase in the processing time, or it is necessary to move a knife-shaped blade linearly against a curved bone, which may lead to a decrease in the yield.

The efficiency of such meat processing may be improved, for instance, by using a robot arm which automatically grasps a work conveyed by a conveyor, performing a necessary process on the work while the work is in a posture hung from the robot arm, and then pulling and separating meat from the work. However, the shape of the work to be processed varies to some extent depending on the individual variability and the result of preparation, and thus it is not easy to appropriately grasp a work conveyed on a conveyor with a robot arm. Furthermore, a robot arm is capable of performing various types of processes using different kinds of software installed on a controller, but not suitable for a process which requires a great force such as separation of meat, as described above. If a robot arm should handle a great force, the size of the robot arm would increase, which would also increase the scale of the facility.

At least one embodiment of the present disclosure was made in view of the above, and an object is to provide a work grasping apparatus and a work grasping method capable of appropriately grasping a work on a conveyance unit and operating the grasped work with a great driving force with a simple configuration.

### Solution to the Problems

(1) To solve the above problem, a work grasping apparatus according to at least one aspect of the present disclosure includes: a gripper for grasping a work conveyed by a conveyance unit; a rotation unit for rotating the gripper so as to adjust an angle of the gripper with respect to a horizontal plane; a driving device including a traversing unit and a lifting unit for moving the gripper and the rotation unit in an up-down direction and a front-back direction; and a controller for controlling the driving device and the rotation unit so that the work is grasped by the gripper at a grasping position on the conveyance unit.

According to the above aspect (1), by controlling the rotation unit and the driving device to adjust the angle of the gripper with respect to the horizontal plane and the position in the front-back direction and the up-down direction, it is possible to grasp the work on the grasping position on the conveyance unit appropriately. Accordingly, it is possible to grasp the work on the conveyance unit appropriately with a simplified configuration that does not use a robot arm whose force is limited.

(2) In another aspect, in the above aspect (1), the work grasping apparatus further includes: a first sensor for detecting that a tip end portion of the work on the conveyance unit has reached a first position. The controller is configured to move a grasp portion of the work to the grasping position by returning the work in an opposite direction by a predetermined amount with the conveyance unit if the first sensor detects that the tip end portion of the work has reached the first position.

According to the above aspect (2), the first sensor detects that the tip end portion of the conveyed work has reached the first position. In this case, the conveyance unit returns the work in the opposite direction by a predetermined amount set in advance, and thereby it is possible to move the grasp portion of the work accurately to the grasping position on the conveyance unit. Accordingly, by controlling the rotation unit and the driving device to allow the gripper to approach the grasping position on the conveyance unit, it is possible to grasp the work on the conveyance unit appropriately.

(3) In another aspect, in the above aspect (1) or (2), the work grasping apparatus further includes a guide for adjusting a posture of the work conveyed by the conveyance unit.

According to the above aspect (3), the guide is provided for the conveyance unit, and thereby the posture of the work being conveyed on the conveyance unit is adjusted. Accordingly, the posture of the work on the conveyance unit is equalized, and thereby it is possible to grasp the work accurately with the gripper moved by the driving device and the rotation unit.

(4) In another aspect, in the above aspect (3), the guide includes a pair of guide members disposed at opposite sides in a width direction of the conveyance unit such that a distance between the guide members decreases toward a downstream side of the conveyance unit.

According to the above aspect (4), a pair of guide members are disposed on opposite sides of the conveyance unit in the width direction. The pair of guide members are disposed so that the distance between one another decreases toward the downstream side, and thereby it is possible to adjust the posture of the work appropriately so that the center axis of the work conveyed by the conveyance unit is aligned with the center of the pair of guide members.

(5) In another aspect, in the above aspect (1), the work grasping apparatus further includes: a first sensor for detecting that a tip end portion of the work on the conveyance unit has reached a first position at a first distance from a downstream end of the conveyance unit; a second sensor for detecting that the tip end portion of the work on the conveyance unit has reached a second position at a second distance which is smaller than the first distance from the downstream end of the conveyance unit; a guide for adjusting a posture of the work conveyed by the conveyance unit; and a retaining pressure adjustment part for adjusting a retaining pressure of the guide. The controller is configured to adjust the retaining pressure of the guide to decrease with the retaining pressure adjustment part and then move the grasp portion of the work to the grasping position by further conveying the work in a forward direction with the conveyance unit so that the tip end portion of the work reaches the first position, if the second sensor detects that the tip end portion of the work conveyed along the forward direction by the conveyance unit has reached the second position.

According to the above aspect (5), when the second sensor detects that the tip end portion of the work conveyed along the forward direction has reached the second position, the retaining pressure of the guide for adjusting the posture of the conveyed work is adjusted to decrease. While the pressing load applied from the guide to the work when the work contacts the guide in the course of conveyance may vary depending on the hardness of the work, by adjusting the retaining pressure of the guide to decrease as described above, it is possible to mitigate the pressing load applied to the work from the guide, and appropriately prevent conveyance failures such as the conveyed work getting on the guide. Accordingly, it is possible to use the guide to absorb the pressing load applied to the work when the work being conveyed contacts the guide and realize conveyance to the grasping position accurately. Accordingly, it is possible to grasp the work moved to the grasping position accurately through combination of the above described rotation movement of the gripper by the rotation unit and the movement in the front-back direction and the up-down direction by the traversing unit and the lifting unit.

(6) In another aspect, in the above aspect (5), the controller is configured to readjust the retaining pressure of the guide with the retaining pressure adjustment part if the first sensor detects that the tip end portion of the work conveyed along the forward direction by the conveyance unit has reached the first position.

According to the above aspect (6), when the tip end portion of the work conveyed by the conveyance unit has reached the first position, the retaining pressure of the guide is readjusted. The retaining pressure is readjusted so that the work comes to the appropriate grasping position again, and thereby it is possible to grasp the work with the gripper accurately.

(7) In another aspect, in the above aspect (5) or (6), the controller is configured to control the conveyance unit so that the work is conveyed in the forward direction against the retaining pressure of the guide until the tip end portion of the work reaches the first position from the second position.

According to the above aspect (7), the work conveyed in the forward direction by the conveyance unit is supported by the guide whose retaining pressure is adjusted to decrease until the tip end portion of the work reaches the first position from the second position. Accordingly, it is possible to appropriately prevent conveyance failures such as the work getting on the guide due to an excessive pressing load applied to the work from the guide.

(8) In another aspect, in any one of the above aspects (5) to (7), the retaining pressure adjustment part is configured to adjust the retaining pressure on the basis of a temperature of the work.

According to the above aspect (8), in a case where the hardness of the work depends on the temperature of the work, by adjusting the retaining pressure of the guide as described above, it is possible to appropriately prevent conveyance failures such as the conveyed work getting on the guide.

(9) In another aspect, in any one of the above aspects (5) to (8), the guide includes a pair of guide members disposed at opposite sides in a width direction of the conveyance unit such that a distance between the guide members decreases toward a downstream side of the conveyance unit.

According to the above aspect (9), a pair of guide members are disposed on both sides of the conveyance unit in the width direction. The pair of guide members are disposed so that the distance between one another decreases toward the downstream side, and thereby it is possible to adjust the posture of the work appropriately so that the center axis of the work conveyed by the conveyance unit is aligned with the center of the pair of guide members.

(10) In another aspect, in any one of the above aspects (1) to (9), the work grasping apparatus further includes a third sensor for detecting a grasp portion of the work by the gripper in a state where the work grasped by the gripper is rotated to a hung posture by the rotation unit.

According to the above aspect (10), the work grasped by the conveyance unit takes a hung posture as the rotation unit rotates the gripper. That is, the third sensor detects the grasp portion of the work in a hung posture, and thereby it is possible to appropriately identify the position where various types of processing are performed with reference to the grasp portion.

(11) In another aspect, in the above aspect (10), a processing position of the work is determined by matching the grasp portion detected by the third sensor and image data of the work.

According to the above aspect (11), by matching the grasping position of the work by the gripper detected by the third sensor and image data of the work obtained in advance, it is possible to appropriately determine the processing position that is the position for performing various types of processing on the work.

(12) In another aspect, in the above aspect (11), the processing position is an incision portion for inserting a meat separator extending along a horizontal direction.

According to the above aspect (12), it is possible to appropriately determine the incision portion for inserting the meat separator used to pull and separate meat from the work on the basis of the grasping position detected by the third sensor. Accordingly, it is possible to appropriately perform the meat separation process by inserting the meat separator into the incision portion.

(13) In another aspect, in the above aspect (12), the controller is configured to control the driving device so as to lift up or down the gripper grasping the work while the meat separator is inserted in the incision portion.

According to the above aspect (13), by lifting up and down the gripper while the work is grasped accordingly, it is possible to apply a great separating force between the gripper and the meat separator inserted into the incision portion. Accordingly, it is possible to perform a meat separating process using a great force compared to a robot arm with a simplified configuration.

(14) In another aspect, in any one of the above aspects (1) to (13), the rotation unit includes: a first rotation mechanism for rotating the gripper about a first axis along the vertical plane; and a second rotation mechanism for rotating the gripper about a second axis which intersects with the first axis.

According to the above aspect (14), by rotating the gripper about each of the first axis and the second axis, the flexibility of the gripper increases, and thereby it is possible to grasp the work on the conveyance unit more flexibly.

(15) To solve the above problem, a work grasping method according to at least one aspect of the present disclosure includes: a gripper for grasping a work conveyed by a conveyance unit; a rotation unit for rotating the gripper so as to adjust an angle of the gripper with respect to a horizontal plane; and a driving device including a traversing unit and a lifting unit for moving the gripper and the rotation unit in an up-down direction and a front-back direction. The method includes controlling the driving device and the rotation unit so that the work is grasped by the gripper at a grasping position on the conveyance unit.

According to the above aspect (15), by controlling the rotation unit and the driving device to adjust the angle of the gripper with respect to the horizontal plane and the position in the front-back direction and the up-down direction, it is possible to grasp the work on the grasping position of the conveyance unit appropriately. Accordingly, it is possible to grasp the work on the conveyance unit appropriately with a simplified configuration that does not use a robot arm whose force is limited.

### Advantageous Effects

According to at least one embodiment of the present disclosure, it is possible to provide a work grasping apparatus and a work grasping method capable of appropriately grasping a work on a conveyor and operating the grasped work with a great driving force with a simple configuration.

### BRIEF DESCRIPTION OF DRAWINGS

FIG. 1 is a schematic configuration diagram of a meat processing system according to an embodiment.
FIG. 2 is a schematic diagram of the work in FIG. 1.
FIG. 3 is a schematic configuration diagram showing a side view of the meat processing apparatus in FIG. 1.
FIG. 4 is an enlarged view showing an area around the gripper in FIG. 3.
FIG. 5 is a top enlarged view showing the vicinity of the downstream end of the conveyor in FIG. 3.
FIG. 6 is a perspective view schematically showing the meat processing apparatus in FIG. 3.
FIG. 7 is a flowchart of a meat processing method according to an embodiment.
FIG. 8A is an explanatory diagram corresponding to step S101 in FIG. 7.
FIG. 8B is an explanatory diagram corresponding to step S103 in FIG. 7.
FIG. 8C is an explanatory diagram corresponding to step S104 in FIG. 7.
FIG. 8D is an explanatory diagram corresponding to step S105 in FIG. 7.
FIG. 8E is an explanatory diagram corresponding to step S107 in FIG. 7.
FIG. 9 is a modified example of FIG. 5.
FIG. 10 is a flowchart showing a meat processing method which is implementable with a processing apparatus including a work grasping apparatus according to the modified example of FIG. 9.
FIG. 11A is an explanatory diagram corresponding to step S 200 to S204 in FIG. 10.
FIG. 11B is an explanatory diagram corresponding to step S 200 to S204 in FIG. 10.
FIG. 11C is an explanatory diagram corresponding to step S 200 to S204 in FIG. 10.

### DETAILED DESCRIPTION

Embodiments of the present invention will now be described in detail with reference to the accompanying drawings. It is intended, however, that unless particularly identified, dimensions, materials, shapes, relative positions and the like of components described in the embodiments shall be interpreted as illustrative only and not intended to limit the scope of the present invention.

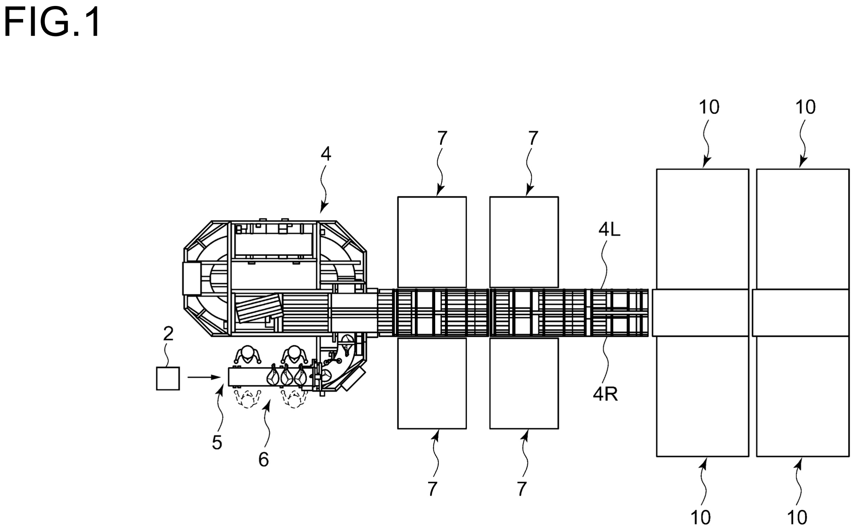

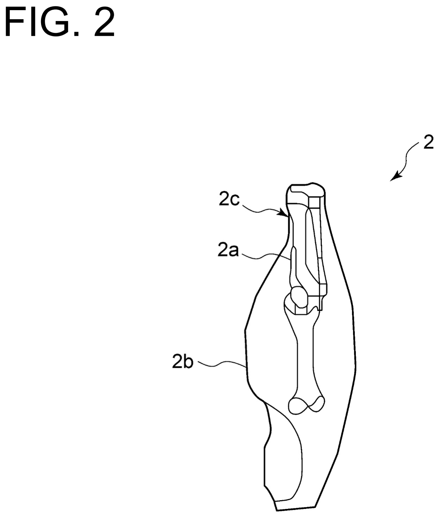

FIG. 1 is a schematic configuration diagram of a meat processing system 1 according to an embodiment. FIG. 2 is a schematic diagram of a work 2 in FIG. 1. The meat processing system 1 is a system for automatically performing conveyance and processing on the work 2 being a piece of meat.

The work 2 is, as depicted in FIG. 2, a piece of meat including a bone portion 2a and a meat portion 2b. In the present embodiment, a leg portion of a poultry bird having an ankle portion 2c is shown as an example of the work 2. In this work 2, the meat portion 2b has a larger volume adhering to the opposite side from the ankle portion 2c. The adhesion amount of the meat portion 2b is smaller at the ankle portion 2c, and the width of the ankle portion 2c is relatively small.

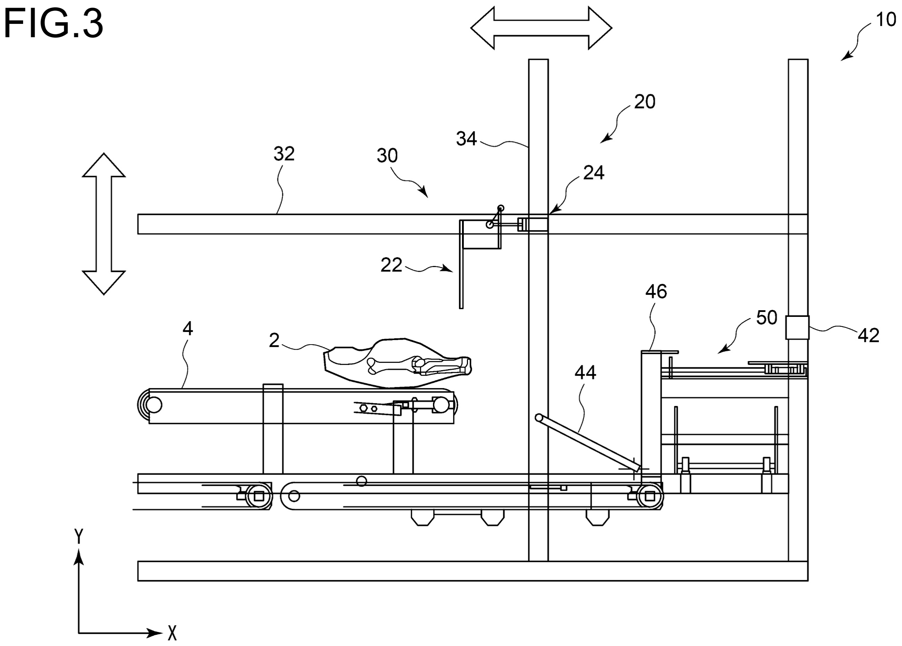

The work 2 depicted in FIG. 3 is merely an example, and the type of meat may be pork, beef, fish, horse, or the like, and the part is not limitative.

As depicted in FIG. 1, the meat processing system 1 includes a conveyance unit 3, at least one processing station 7, and at least one meat processing apparatus 10.

The conveyance unit 3 is a configuration for conveying the work 2 to be processed, and includes a conveyor 4 capable of conveying the work 2 supplied from a supply unit (not depicted) positioned at the upstream side to the processing station 7 or the meat processing apparatus 10 disposed at the downstream side. The conveyor 4 receives a work 2 from the supply unit at an inlet part 5 at the most upstream side. A preparation area 6 where workers can be positioned at opposite sides of the conveyor 4 is disposed in the vicinity of the inlet part 5. In the preparation area 6, it is possible to perform necessary preparation on the work 2 in a stage before processing at the processing station 7 and the meat processing apparatus 10 at the downstream side.

While the conveyor 4 is constituted of a single lane at the relatively upstream side of the conveyance unit 3 that includes the preparation area 6, the conveyor 4 branches midway into a left lane 4L and a right lane 4R at the relatively downstream side, and the work 2 conveyed from the upstream side is distributed to the left lane 4L or the right lane 4R by a non-depicted switch part. A processing station 7 and a meat processing apparatus 10 are disposed on each of the left lane 4L or the right lane 4R. The work 2 processed at the processing station 7 and the meat processing apparatus 10 is conveyed outside via a discharge lane.

In the following description, when not differentiated, the left lane 4L and the right lane 4R are collectively referred to as a conveyor 4 as needed.

The processing station 7 receives the work 2 from the conveyor 4 and processes meat with a multi-axis robot (not depicted) equipped with a meat processing tool. Meat processing at the processing station 7 is performed using a relatively small force, like conventional meat processing apparatuses for performing meat processing like making an incision on a work (see patent publications JP 4961613B, JP4867050B, JP5788076B, JP5788077B, JP2022-170894A or the like, for instance).

While two processing stations 7 are disposed along each of the left lane 4L and the right lane 4R in the configuration example of the present embodiment, the number of processing stations 7 for each lane is not particularly limited. The processing stations 7 may have the same configuration with one another, or different configurations with one another.

The meat processing apparatus 10 is an apparatus for grasping the work 2 that is conveyed by the conveyance unit 3 and located on the conveyor 4, and for performing a process on the grasped work 2. The meat processing apparatus 10 includes a work grasping apparatus 20 and a processing apparatus 50 described below. The work grasping apparatus 20 is an apparatus for grasping the work 2 conveyed by the conveyance unit 3 being located on the conveyor 4, and the processing apparatus 50 is an apparatus for performing various types of processing on the work 2 grasped by the work grasping apparatus 20 by working together with the work grasping apparatus 20.

The processing performed by the meat processing apparatus 10 includes processes which require a great force compared to the above described processing station 7. In the present embodiment, a process of pulling and separating the meat portion 2b from the work 2 is described as an example of processing performed by the meat processing apparatus 10. Nevertheless, the present embodiment may be applied to another type of processing. The meat portion 2b pulled and separated from the work 2 is discharged outside by the discharge conveyor (not depicted) positioned at a lower stage (the remainder of the work 2 after separation of the meat portion 2b is returned to the conveyor 4 and conveyed to another process at the downstream side).

Furthermore, the meat processing system 1 includes a controller (not depicted) for controlling the above configurations. The controller is one or more computation devices. The processor included in the computation device may be CPU, GPU, MPU, DSP, or combination of the above, or may be implemented by an integrated circuit such as PLD, ASIC, FPGA, or MCU. The computation device may include a memory such as ROM, RAM or a flash memory as needed.

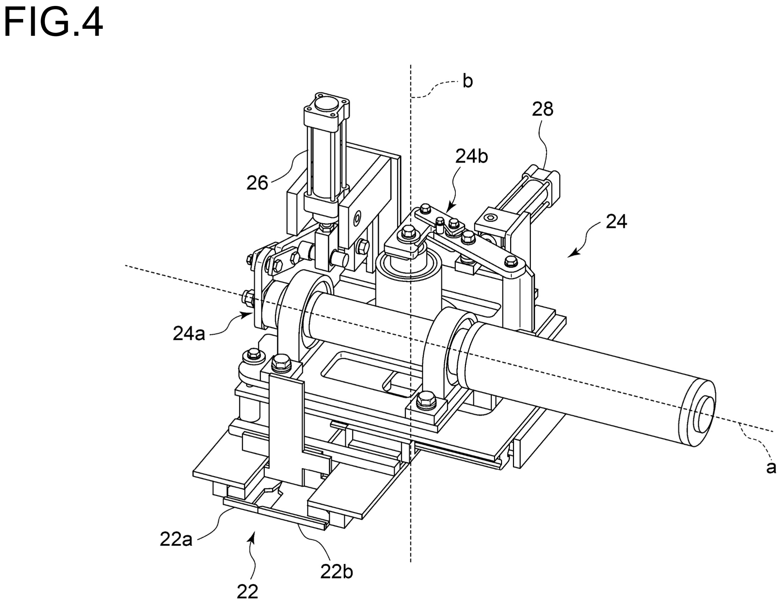

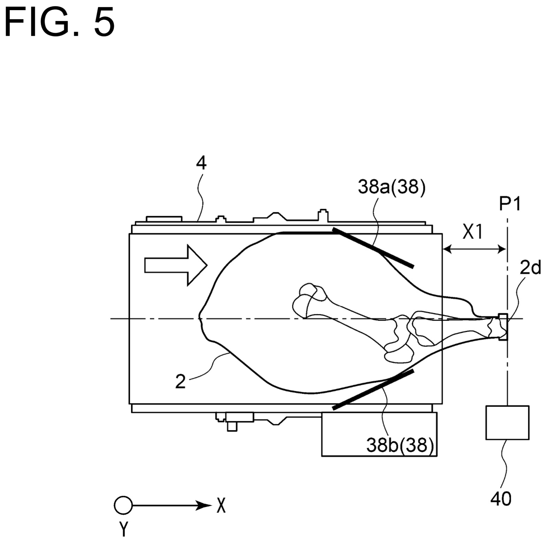

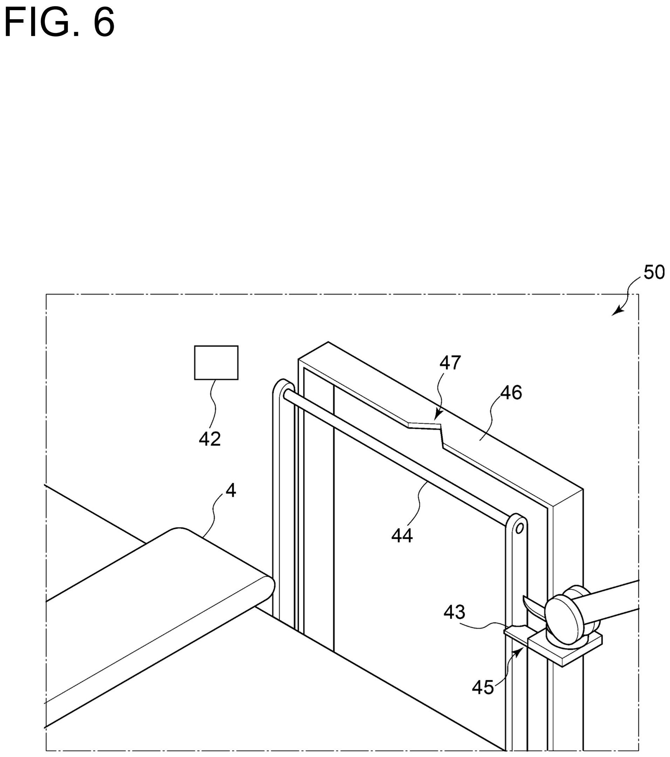

Next, the configuration of the work grasping apparatus 20 of the meat processing apparatus 10 will be described specifically. FIG. 3 is a schematic configuration diagram showing a side view of the meat processing apparatus 10 in FIG. 1. FIG. 4 is an enlarged view showing an area around the gripper 22 in FIG. 3. FIG. 5 is a top enlarged view showing the vicinity of the downstream end of the conveyor 4 in FIG. 3. FIG. 6 is a perspective view schematically showing the meat processing apparatus 50 in FIG. 3.

The work grasping apparatus 20 includes a gripper 22, a rotation unit 24, and a driving device 30. The gripper 22, the rotation unit 24, and the driving device 30 are each capable of working together to exert the functions described below by being automatically controlled on the basis of control signals from the controller.

As depicted in FIG. 4, the gripper 22 includes a pair of claw portions 22a, 22b capable of opening and closing in response to control signals from the controller. When the gripper 22 is in an open state, a gap larger than the ankle portion 2c that is a grasp portion of the work 2 is interposed between the pair of claw portions 22a, 22b, and thereby it is possible to insert the ankle portion 2c of the work 2 into the gap. Meanwhile, when the gripper 22 is in a closed state, the gap is narrowed so that the insides of the pair of claw portions 22a, 22b contact the ankle portion 2c, and thereby the gripper 22 grasps the ankle portion 2c of the work 2 inserted into the gap (in FIG. 4, the gripper 22 is closed).

With regard to the open-close operation of the gripper 22, both of the pair of claw portions 22a, 22b may be movable, or one may be fixed and only the other one may be movable.

The rotation unit 24 is a configuration for rotating the gripper 22. The rotation unit 24 is configured to be capable of adjusting at least the angle of the gripper 22 with respect to the horizontal plane. As depicted in FIG. 4, the rotation unit 24 includes a first rotation mechanism 24a and a second rotation mechanism 24b having different rotation axes from one another (that is, the gripper is rotatable about two axes). In the present embodiment in particular, the rotation axes of the first rotation mechanism 24a and the second rotation mechanism 24b are orthogonal to one another.

The first rotation mechanism 24a is a configuration for rotating the gripper 22 about the first rotation axis 'a' to adjust the angle of the gripper 22 with respect to the horizontal plane. The first rotation mechanism 24a includes an actuator 26 as a power source for rotating the gripper 22 about the first rotation axis 'a'. As the actuator, a hydraulic cylinder, a pneumatic cylinder, or an electric cylinder may be used. The actuator 26 is capable of controlling the rotation amount of the gripper 22 about the first rotation axis 'a' by being adjusted on the basis of control signals from the above described controller.

The second rotation mechanism 24b is a configuration for rotating the gripper 22 about the second rotation axis 'b' that intersects with the first rotation axis 'a'. The second rotation mechanism 24b includes an actuator 28 as a power source for rotating the gripper 22 about the second rotation axis 'b'. As the actuator, a hydraulic cylinder, a pneumatic cylinder, or an electric cylinder may be used. The actuator 28 is capable of controlling the rotation amount of the gripper 22 about the second rotation axis 'b' by being adjusted on the basis of control signals from the above described controller.

The driving device 30 is a device for moving the rotation unit 24 to which the gripper 22 is mounted in a front-back direction and an up-down direction. As depicted in FIG. 3, the driving device 30 includes a first rail 32 extending along the first direction X and a second rail 34 extending along the second direction Y that intersects with the first direction X, as a traversing unit and a lifting unit. In the present embodiment, the first direction X and the second direction Y intersect with one another orthogonally. The gripper 22 is movable on the first rail 32 and the second rail 34 with the rotation unit 24. That is, the gripper 22 is movable on the first rail 32 along the first direction X, and is movable on the second rail 34 along the second direction Y.

Furthermore, the driving device 30 is configured such that the first rail 32 extending along the first direction X is movable along the second direction Y with power from a servomotor which is a non-depicted driving source. The second rail 34 extending along the second direction Y is movable along the first direction X with power from a servomotor which is a non-depicted driving source. These servomotors are driven on the basis of control signals from the above described controller, and are capable of moving the position of the gripper 22 mounted to the first rail 32 and the second rail 34 via the rotation unit to a selected position on the XY plane.

As described above, the work grasping apparatus 20 is capable of operating the gripper 22 with a high flexibility on the two-dimensional plane (plane parallel to the drawing) defined by the first direction X and the second direction Y by combining movement by the rotation unit 24 and movement by the driving device 30. Accordingly, it is possible to allow the gripper 22 to approach, at an appropriate angle, to the ankle portion 2c of the work 2 at the grasping position on the conveyor 4, and realize the grasping movement of the gripper 22 accurately with a simplified configuration.

The specific method for controlling the rotation unit 24 and the driving device 30 will be described later.

Furthermore, as depicted in FIG. 5, a guide 38 for adjusting the posture of the work 2 conveyed from the upstream side is disposed on the conveyor 4. When the work 2 is input to the conveyor 4 at the upstream side, the work 2 is set in advance to have a posture that the tip end portion 2d is oriented toward the substantially downstream side, but the posture varies to some extent. The guide 38 includes a pair of guide members 38a, 38b disposed at opposite sides of the width direction of the conveyor 4 so that the distance between the guide members 38a, 38b decreases toward the downstream side of the conveyor 4. The work 2 is conveyed along the forward direction on the conveyor 4, and the posture of the work 2 on the conveyor 4 is uniformized as the pair of guide members 38a, 38b adjust the posture so that the tip end portion 2d moves closer to the center. Accordingly, it is possible to grasp the work 2 on the conveyor 4 with the gripper 22 accurately.

Meanwhile, the pair of guide members 38a, 38b are disposed so as to have a predetermined angle with respect to the extension direction of the conveyor 4, and may be configured such that the angle is variable as needed.

The first sensor 40 is disposed in the vicinity of the downstream end of the conveyor 4. The first sensor 40 is an optical sensor capable of detecting, without contact, that the tip end portion 2d of the work 2 conveyed on the conveyor 4 has reached the first position P1 by emitting measurement light and detecting reflected light of the measurement light. In a case where the guide 38 is disposed on the conveyor 4 as described above, the first sensor 40 is capable of detecting that the tip end portion 2d of the work 2 has reached the first position P1 after adjustment of the posture by the guide 38.

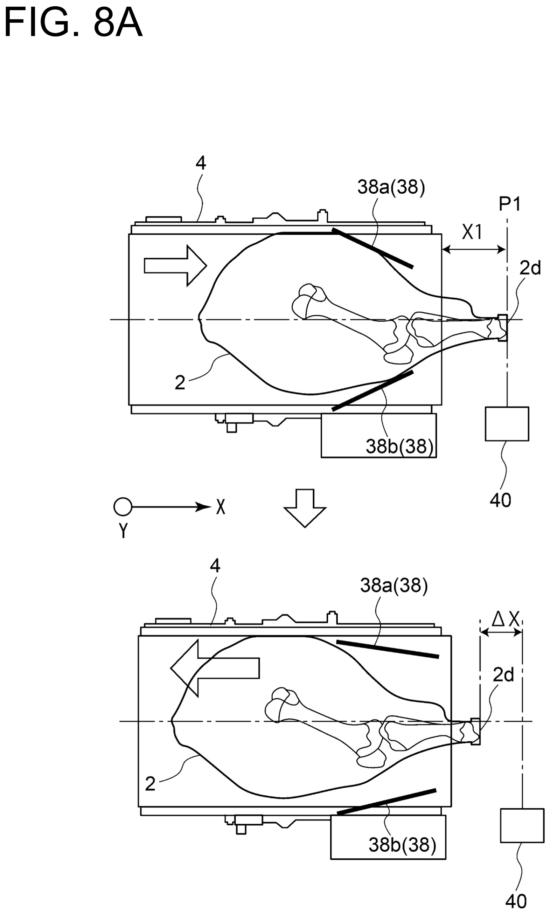

The first position P1 is at a position away from the downstream end of the conveyor 4 by the first distance X1. The first sensor 40 is disposed at a position capable of emitting measurement light in a substantially vertical direction with respect to the extension direction of the conveyor 4 from the lateral side of the conveyor 4 so as to correspond to the first position P1. When the first sensor 40 detects that the tip end portion 2d of the work 2 has reached the first position P1, the controller returns the conveyor 4 in the opposite direction by a predetermined amount as described below with reference to FIG. 8A, and thereby it is possible to move the grasp portion of the work (the vicinity of the ankle portion 2c) accurately to the grasping position on the conveyor 4. Accordingly, it is possible to grasp the work 2 moved to the grasping position accurately through combination of the above described rotation movement of the gripper 22 by the rotation unit 24 and the movement in the front-back direction and the up-down direction by the traversing unit and the lifting unit constituting the driving device 30.

The processing apparatus 50 is an apparatus for performing a predetermined process in a state where the work 2 grasped by the gripper 22 is brought into a hung posture at a predetermined position by the rotation unit 24 and the driving device 30 described above.

The processing apparatus 50 includes a third sensor 42 for detecting the state of the work 2 in a hung posture. In the present embodiment, the third sensor 42 is a noncontact type optical sensor, similarly to the above described first sensor 40, and is configured to detect the grasp portion of the work 2 in a hung posture grasped by the gripper 22.

The detection results of the third sensor 42 are sent to the controller, and used to determine the position where the processing apparatus 50 performs processing. That is, the third sensor 42 detects the grasp portion of the work 2 in a hung posture grasped by the gripper 22, and thereby the position where the processing apparatus 50 should perform various types of processing is identified suitably with reference to the grasp portion.

In this case, if the controller has information related to the shape of the work 2 on the conveyor 4 in a stage before the work grasping apparatus 20 grasps the work, the controller may perform the above determination taking into account the information in addition to the detection results of the third sensor 42. For instance, if a non-depicted image capturing device captures image data of the work 2 at the upstream side of the grasping position of the conveyor 4, the controller may determine the processing position of the work 2 by matching the grasp portion by the gripper 22 detected by the third sensor 42 and the image data.

The processing apparatus 30 includes a robot arm 45 having a tool 43 capable of forming an incision portion (not depicted) on the work 2 at the tip end (see FIG. 6), and a meat separator 46 that is insertable into the incision portion formed on the work 2. The robot arm 45 is a multi-axis robot and is movable on the basis of the control signals from a non-depicted controller. The robot arm 45 has a robot structure with six or more axes and the tool 43 mounted to the tip end is capable of approaching the work 2 at a selected angle or posture. The controller controls the robot arm 45 to form an incision portion at the processing position identified from the detection results of the third sensor 42 as described above.

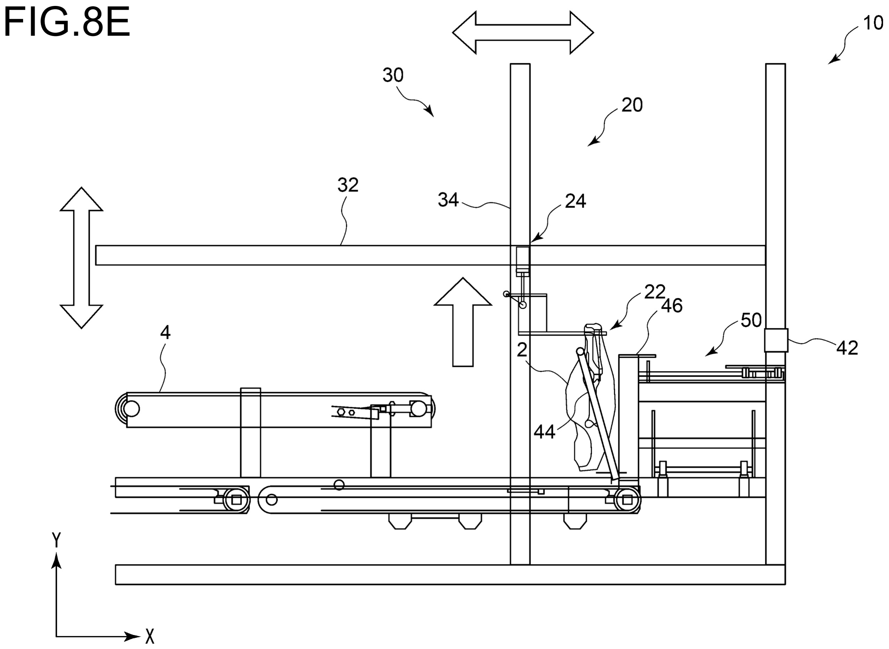

The meat separator 46 has a plate-shaped portion extending in the horizontal direction. As seen from the work 2 grasped by the gripper 22, a support part 44 is disposed at the opposite side to the meat separator 46, and the meat separator 46 inserted into the incision portion and the support part 44 nip and hold the work 2. The support part 44 is rotatable by a non-depicted actuator. With the gripper 22 moved upward in this state as described below with reference to FIG. 8E, the meat portion 2b grasped between the meat separator 46 and the support part 44 is pulled separated from the work 2.

The support part 44A has a recess portion 47 corresponding to the work 2. Accordingly, when the meat separator 46 and the support part 44 nip and hold the work 2, it is possible to prevent the work 2 from moving sideways and stabilize the posture of the work 2.

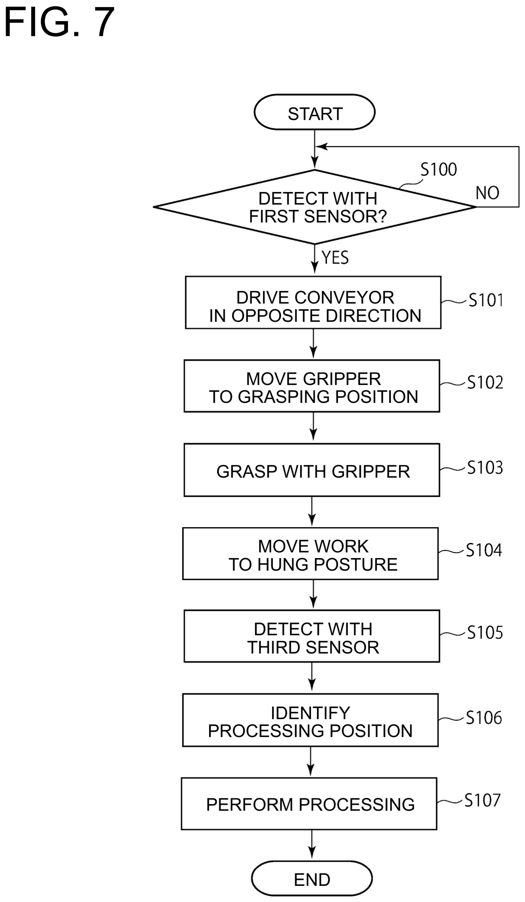

Next, a meat processing method to be performed by the meat processing system 10 having the above configuration will be described. FIG. 7 is a flowchart of a meat processing method according to an embodiment. FIGs. 8A to 8E are each is an explanatory diagram corresponding to the respective step in FIG. 7.

Firstly, in the situation where works 2 are conveyed on the conveyor 4 sequentially, the first sensor 40 determines whether the tip end portion 2d of a specific work 2 has reached the first position P1 (step S100). When the first sensor 40 detects that the tip end portion 2d of the work 2 has reached the first position P1 (step S100: YES), the conveyor 4 is returned in the opposite direction by a predetermined amount ΔX as depicted in FIG. 8A (step S101), and thereby the grasp portion of the work 2 is adjusted to move to the grasping position on the conveyor 4.

The ankle portion 2c of the work 2 is a part of meat that may have different sizes depending on the preparation, and thus have a great individual difference. By returning the conveyor 4 in the opposite direction by a predetermined amount ΔX after the first sensor 40 detects that the tip end portion 2d of the work 2 has reached the first position P1, it is possible to consistently identify the position returned by a predetermined amount ΔX from the tip end portion 2d of the work 2 as the grasping position regardless of the size of the ankle portion 2c of the work 2.

Next, the controller controls the rotation unit 24 and the driving device 30 to move the gripper 22 to the grasping position on the conveyor 4 (step S102). In step S102, as described above, the rotation unit 24 adjusts the angle of the gripper 22 to an angle appropriate for grasping the work 2, and the driving device 30 controls the gripper 22 to approach the grasping position on the conveyor 4.

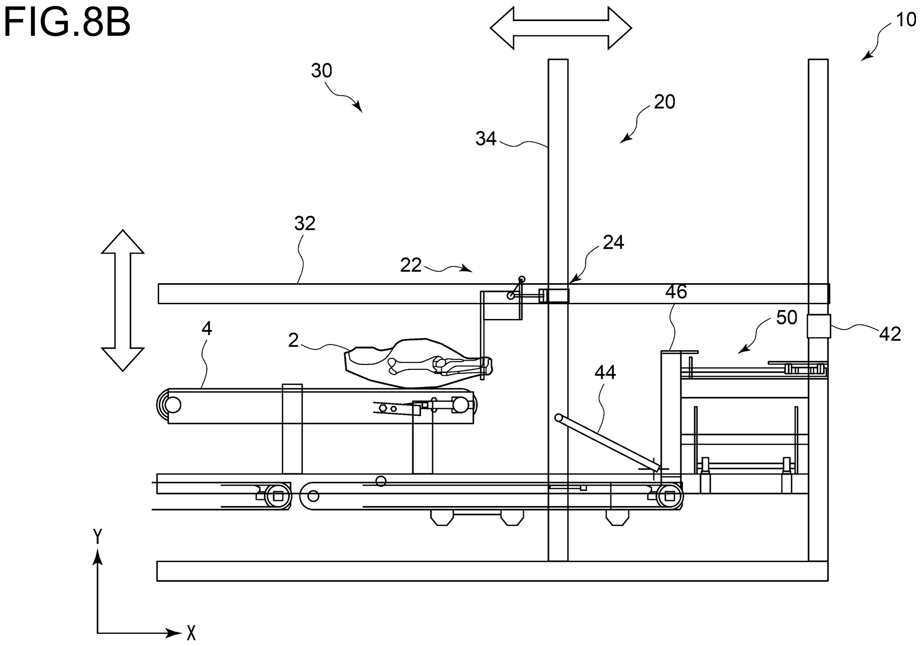

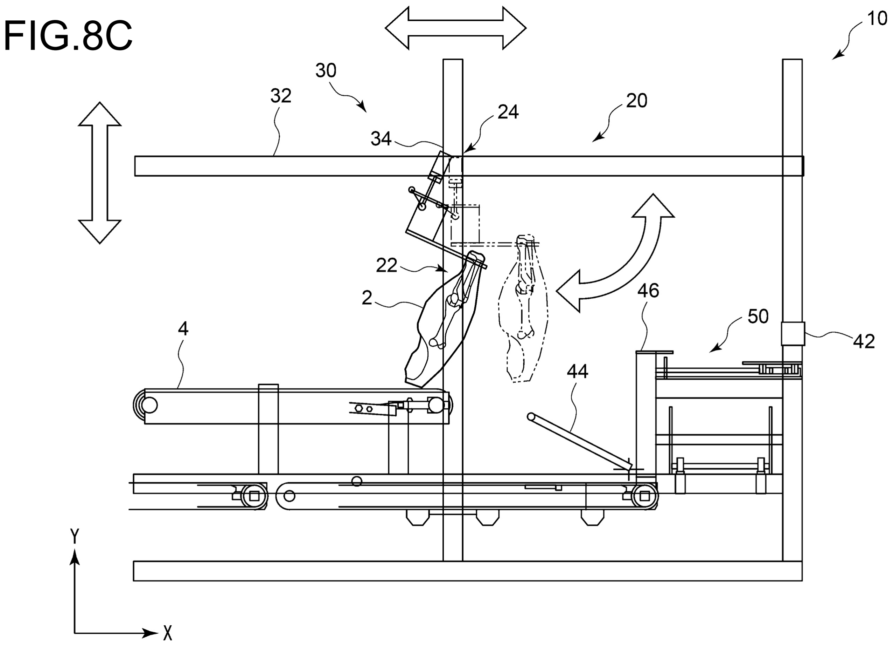

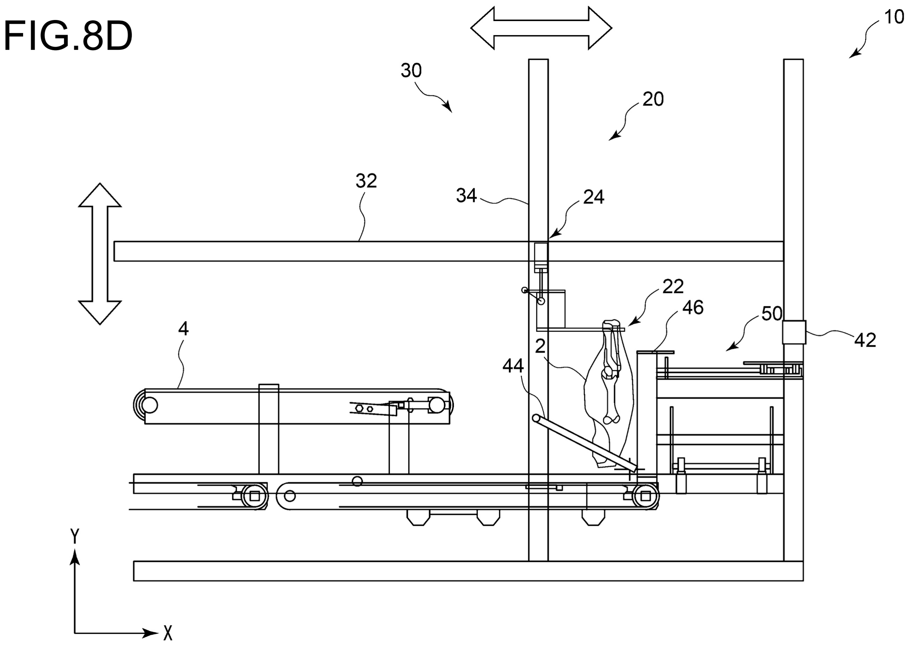

Next, as depicted in FIG. 8, the controller controls the gripper 22 to grasp the grasp portion of the work 2 at the grasping position (step S103). In step S103, the grasp portion of the work 2 is inserted between the pair of claw portions 22a, 22b of the gripper 22 in the open state, and the gripper 22 is closed to narrow the gap between the pair of claw portions 22a, 22b to grasp the work 2.

Next, as depicted in FIG. 8C, the controller controls the rotation unit 24 and the driving device 30 to move the work 2 with the gripper 22 so that the work 2 takes a hung posture (step S104). In step S104, the rotation unit 24 and the driving device 30 work together, and thereby the grasped work 2 is lifted up from the conveyor 4. Then, at a predetermined position where the work 2 does not interfere with the conveyor 4, the rotation unit 24 adjusts the angle of the gripper 22 to a substantially horizontal direction, thereby realizing a hung posture of the work 2 where the meat portion of the work 2 is oriented downward.

Next, as depicted in FIG. 8D, the third sensor 42 (see FIG. 6) detects the grasp portion of the work 2 in a hung posture (step S105), and then the processing position at which the processing is performed is identified on the basis of the detection result (step S106). In step S106, in a case where the image data of the work 2 is obtained in advance, the processing position may be identified by matching the detection result of the third sensor 42 with the image data, as described above.

Next, processing is performed at the processing position identified in step S106 (step S107). In the present embodiment, as an example of processing, as depicted in FIG. 8E, the meat portion is separated from the work 2 by lifting up and down the gripper 22 grasping the work 2 while the meat separator of the processing apparatus 30 is inserted into an incision portion formed at the processing position and fixed against the support part. By lifting up and down the gripper 22 while the work 2 is grasped accordingly, it is possible to apply a great separating force between the gripper 22 and the meat separator inserted into the incision portion. Accordingly, it is possible to perform a meat separating process with a simplified configuration using a great force compared to a robot arm.

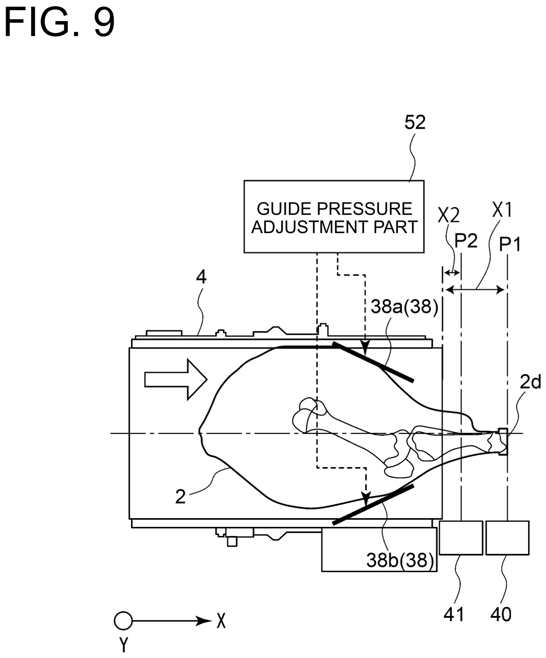

FIG. 9 is a modified example of FIG. 5. The work grasping apparatus 20 according to a modified example includes the second sensor 41 in addition to the above described first sensor 40. The second sensor 41 is a configuration for detecting reaching the second position P2 at the second distance X2 from the downstream end of the conveyor 4 constituting the conveyance unit 3. The second distance X2 is smaller than the first distance X1 corresponding to the first sensor 40 (that is, the second sensor 41 is disposed at a position closer than the first sensor 40 as seen from the downstream end of the conveyor 4). The second sensor 41 is, similarly to the above described first sensor 40, an optical sensor capable of detecting, without contact, that the tip end portion 2d of the work 2 conveyed on the conveyor 4 has reached the second position P2 by emitting measurement light and detecting reflected light of the measurement light.

Furthermore, the work grasping apparatus 20 of the present modified example includes a retaining pressure adjustment part 52 for adjusting the retaining pressure of the above described guide 38. The guide members 38a, 38b constituting the guide 38 are retained against the rim portion of the conveyor 4 constituting the conveyance unit 3 with a predetermined retaining mechanism. The retaining pressure of the guide members 38a, 38b retained by the retaining mechanism is adjustable by the retaining pressure adjustment part 52 as needed. The adjustment of the retaining pressure by the retaining pressure adjustment part 52 may be performed manually by a worker, or through automatic control by a non-depicted controller.

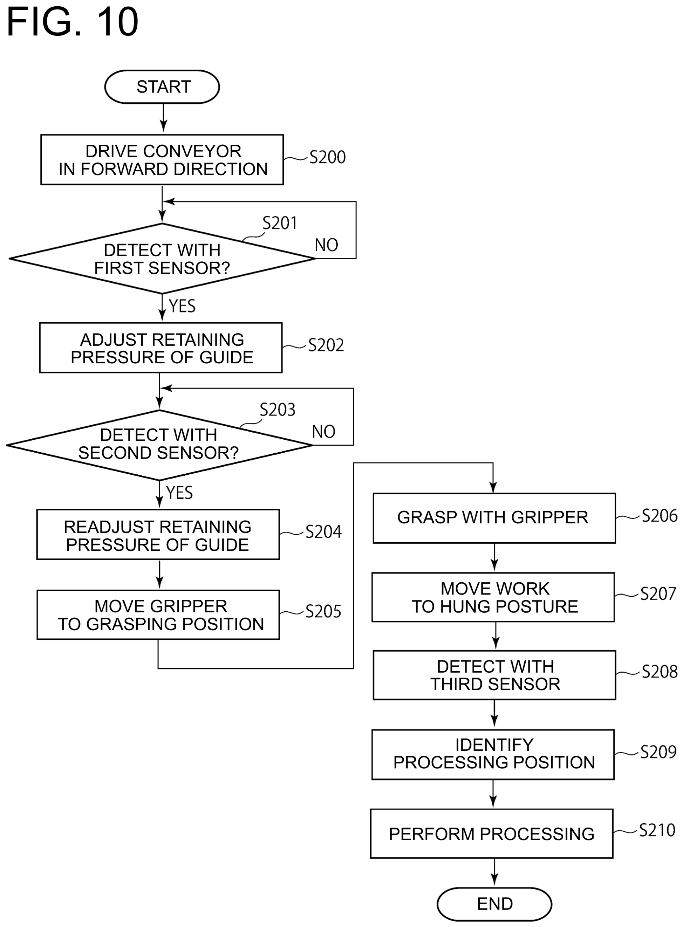

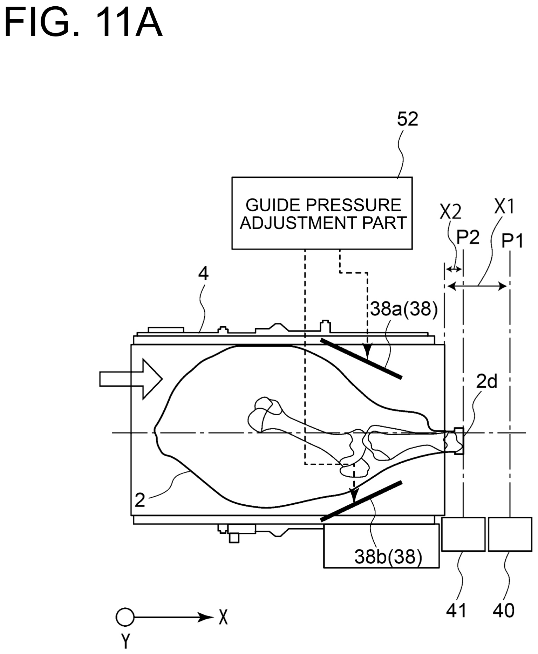

FIG. 10 is a flowchart showing a meat processing method which is implementable with a processing apparatus 50 including a work grasping apparatus 20 according to the modified example of FIG. 9. FIGs. 11A to 11C are each an explanatory diagram corresponding to the respective step in FIG. 10.

Firstly, in the situation where works 2 are conveyed on the conveyor 4 in the forward direction (step S200), the second sensor 41 determines whether the tip end portion 2d of a specific work 2 has reached the second position P2 (step S201). As depicted in FIG. 11A, when the second sensor 41 detects that the tip end portion 2d of the work 2 has reached the second position P2 (step S201: YES), the retaining pressure adjustment part 52 adjusts the retaining pressure of the guide 38 to decrease (step S202).

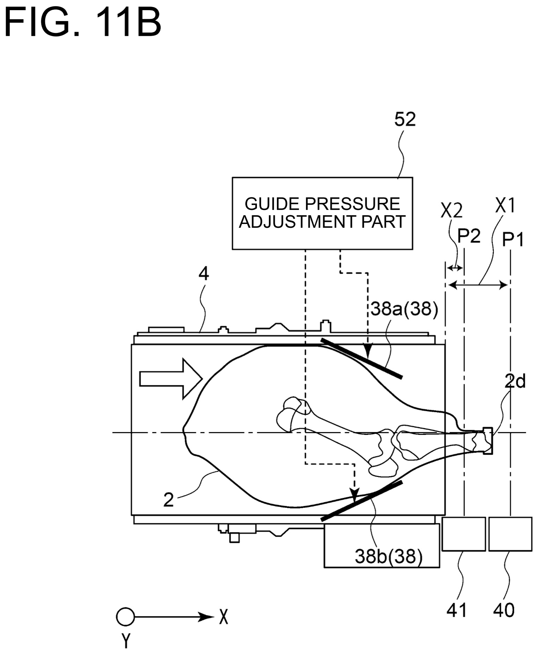

After the retaining pressure of the guide 38 is adjusted to decrease, as depicted in FIG. 11B, a side surface of the work 2 makes contact with the guide 38 while the work 2 is further conveyed toward the downstream side of the conveyor 4, and thereby a pressing load from the guide 38 is applied to the work 2. At this time, the work 2 receives the pressing load from the pair of guide members 38a and 38b disposed at opposite sides of the conveyor 4, and thereby the posture of the work 2 is adjusted so that the tip end portion 2d of the work 2 is positioned on the center line of the conveyor 4. The pressing load applied by the guide 38 depends on the hardness of the work 2, and if the pressing load is too high, a conveyance failure may occur, such as the work 2 getting on the guide 38. For instance, in a case where the work 2 is a piece of meat that is cooled extremely, the meat is harder than moderately cooled meat, and thus the work 2 is less likely to deform in response to the pressing load applied from the guide 38 and more likely to get on the guide 38. However, in the present modified example, the retaining pressure is reduced in step S202, and thus the pressing load applied to the work 2 from the guide 38 is adjusted so as not to be too high, whereby it is possible to absorb the pressing load with flexibility of the guide 38 and suppress such a conveyance failure appropriately.

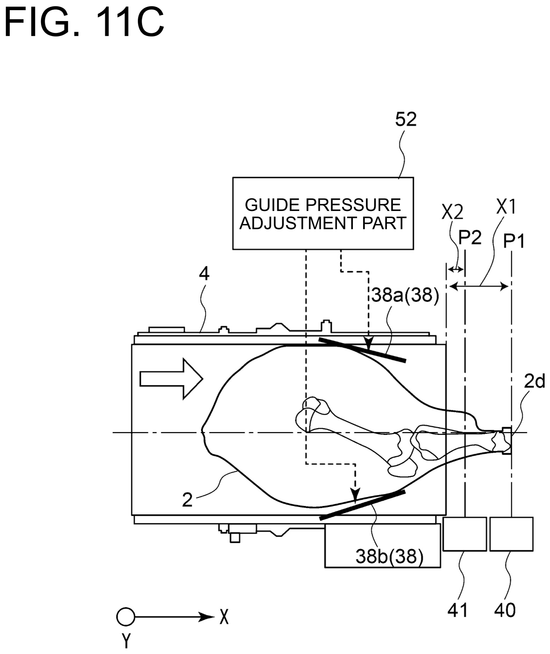

Next, the first sensor 40 determines whether the tip end portion 2d of the work 2 conveyed further along the forward direction by the conveyor 4 has reached the first position P1 (step S203). As depicted in FIG. 11C, when the first sensor 40 detects that the tip end portion 2d of the work 2 has reached the first position P1 (step S203: YES), the retaining pressure adjustment part 52 readjusts the retaining pressure of the guide 38 so that the work is positioned at the appropriate grasping position again (step S204). Accordingly, it is possible to grasp the work 2 with the gripper accurately.

As described above, according to the processes up to step S204, it is possible to position the tip end portion 2d of the work 2 appropriately at the grasping position in the vicinity of the downstream end of the conveyor 4. Accordingly, by performing the processes of step S205 and so on, it is possible to grasp the work 2 moved to the grasping position accurately through combination of the above described rotation movement of the gripper 22 by the rotation unit 24 and the movement in the front-back direction and the up-down direction by the traversing unit and the lifting unit constituting the driving device 30.

Steps S205 and the subsequent steps in FIG. 10 are similar to steps 203 and the subsequent steps in FIG. 7, and thus repetitive description is omitted.

The adjustment of the retaining pressure of the guide 38 in step S202 or S204 may be performed on the basis of the hardness of the work 2. Specifically, the hardness of the work 2 is closely related to the temperature of the work 2 (for instance, the lower the temperature of the work 2, the harder the work 2), and thus the retaining pressure may be adjusted on the basis of the temperature of the work 2.

As described above, according to the present modified example, compared to the above described embodiment, while it is necessary to provide the second sensor 41 and the retaining pressure adjustment part 52, it is possible to accurately position the work 2 to the grasping position with the guide 38 without changing the design of the hardware configuration including the guide 38 and the like, by software-based control using the above configuration. Accordingly, even in a case where the user of the present system handles various types (hardness, temperature, etc.) of work 2, it is possible to position the work 2 to the grasping position accurately through such software-based control in accordance with the state of the work 2.

As described above, according the above embodiments, by controlling the rotation unit 24 and the driving device 30 to adjust the angle of the gripper 22 with respect to the horizontal plane and the position in the front-back direction and the up-down direction, it is possible to grasp the work 2 accurately and perform processing that requires a great force appropriately with a simplified configuration.

### Reference Signs List

- 1: Meat processing system
- 2: Work
- 2a: Bone portion
- 2b: Meat portion
- 2c: Ankle portion
- 2d: Tip end portion
- 3: Conveyance unit
- 4: Conveyor
- 5: Inlet part
- 6: Preparation area
- 7: Processing station
- 10: Meat processing apparatus
- 20: Work grasping apparatus
- 22: Gripper
- 22a, 22b: Claw portion
- 24: Rotation unit
- 24a: First rotation mechanism
- 24b: Second rotation mechanism
- 26, 28: Actuator
- 30: Driving device
- 32: First rail
- 34: Second rail
- 38: Guide
- 38a,: 38b Guide member
- 40: First sensor
- 41: Second sensor
- 42: Third sensor
- 43: Tool
- 44: Support part
- 45: Robot arm
- 46: Meat separator
- 47: Recess portion
- 50: Processing apparatus
- 52: Retaining pressure adjustment part

## Claims

1. A work grasping apparatus, comprising:
a gripper for grasping a work conveyed by a conveyance unit;
a rotation unit for rotating the gripper so as to adjust an angle of the gripper with respect to a horizontal plane;
a driving device including a traversing unit and a lifting unit for moving the gripper and the rotation unit in an up-down direction and a front-back direction; and
a controller for controlling the driving device and the rotation unit so that the work is grasped by the gripper at a grasping position on the conveyance unit.

2. The work grasping apparatus according to claim 1, further comprising:
a first sensor for detecting that a tip end portion of the work on the conveyance unit has reached a first position,
wherein the controller is configured to move a grasp portion of the work to the grasping position by returning the work in an opposite direction by a predetermined amount with the conveyance unit if the first sensor detects that the tip end portion of the work has reached the first position.

3. The work grasping apparatus according to claim 1 or 2, further comprising:
a guide for adjusting a posture of the work conveyed by the conveyance unit.

4. The work grasping apparatus according to claim 3,
wherein the guide includes a pair of guide members disposed at opposite sides in a width direction of the conveyance unit such that a distance between the guide members decreases toward a downstream side of the conveyance unit.

5. The work grasping apparatus according to claim 1, further comprising:
a first sensor for detecting that a tip end portion of the work on the conveyance unit has reached a first position at a first distance from a downstream end of the conveyance unit;
a second sensor for detecting that the tip end portion of the work on the conveyance unit has reached a second position at a second distance which is smaller than the first distance from the downstream end of the conveyance unit;
a guide for adjusting a posture of the work conveyed by the conveyance unit; and
a retaining pressure adjustment part for adjusting a retaining pressure of the guide,
wherein the controller is configured to adjust the retaining pressure of the guide to decrease with the retaining pressure adjustment part and then move the grasp portion of the work to the grasping position by further conveying the work in a forward direction with the conveyance unit so that the tip end portion of the work reaches the first position, if the second sensor detects that the tip end portion of the work conveyed along the forward direction by the conveyance unit has reached the second position.

6. The work grasping apparatus according to claim 5,
wherein the controller is configured to readjust the retaining pressure of the guide with the retaining pressure adjustment part if the first sensor detects that the tip end portion of the work conveyed along the forward direction by the conveyance unit has reached the first position.

7. The work grasping apparatus according to claim 5,
wherein the controller is configured to control the conveyance unit so that the work is conveyed in the forward direction against the retaining pressure of the guide until the tip end portion of the work reaches the first position from the second position.

8. The work grasping apparatus according to claim 5,
wherein the retaining pressure adjustment part is configured to adjust the retaining pressure on the basis of a temperature of the work.

9. The work grasping apparatus according to claim 5,
wherein the guide includes a pair of guide members disposed at opposite sides in a width direction of the conveyance unit such that a distance between the guide members decreases toward a downstream side of the conveyance unit.

10. The work grasping apparatus according to claim 1 or 2, further comprising:
a third sensor for detecting a grasp portion of the work by the gripper in a state where the work grasped by the gripper is rotated to a hung posture by the rotation unit.

11. The work grasping apparatus according to claim 10,
wherein a processing position of the work is determined by matching the grasp portion detected by the third sensor and image data of the work.

12. The work grasping apparatus according to claim 11,
wherein the processing position is an incision portion for inserting a meat separator extending along a horizontal direction.

13. The work grasping apparatus according to claim 12,
wherein the controller is configured to control the driving device so as to lift up or down the gripper grasping the work while the meat separator is inserted in the incision portion.

14. The work grasping apparatus according to claim 1 or 2,
wherein the rotation unit includes:
a first rotation mechanism for rotating the gripper about a first axis along the vertical plane; and
a second rotation mechanism for rotating the gripper about a second axis which intersects with the first axis.

15. A work grasping method, comprising:
a gripper for grasping a work conveyed by a conveyance unit;
a rotation unit for rotating the gripper so as to adjust an angle of the gripper with respect to a horizontal plane; and
a driving device including a traversing unit and a lifting unit for moving the gripper and the rotation unit in an up-down direction and a front-back direction,
wherein the method includes controlling the driving device and the rotation unit so that the work is grasped by the gripper at a grasping position on the conveyance unit.
